Europäisches Patentamt

European Patent Office

Office européen des brevets

(19)

(11) Numéro de publication : **0 011 318**
**B1**

(12) **FASCICULE DE BREVET EUROPÉEN**

(45) Date de publication du fascicule du brevet :
**23.05.84**

(51) Int. Cl.³ : **B 28 D   1/08**

(21) Numéro de dépôt : **79200552.2**

(22) Date de dépôt : **01.10.79**

(54) **Scie pour le découpage suivant un plan vertical de marbres, granits et autres pierres dures.**

(30) Priorité : **26.10.78 IT 8561878**

(43) Date de publication de la demande :
**28.05.80 Bulletin 80/11**

(45) Mention de la délivrance du brevet :
**23.05.84 Bulletin 84/21**

(84) Etats contractants désignés :
**AT BE CH DE FR GB IT LU NL SE**

(56) Documents cités :
**DE-C-   42 785**
**DE-C-   43 597**
**DE-C-   97 459**
**FR-A-   434 596**
**FR-A-   516 412**
**FR-A- 1 098 430**
**GB-A-   19 620**
**GB-A-   29 443**
**NL-A-   248 209**
**US-A- 2 104 258**
**US-A- 2 602 987**
**US-A- 2 670 767**

(73) Titulaire : **Sartori, Mario**
**Via Montello, 2**
**I-36050 Montorso (Vicenza) (IT)**

(72) Inventeur : **Sartori, Mario**
**Via Montello, 2**
**I-36050 Montorso (Vicenza) (IT)**

(74) Mandataire : **Bettello, Luigi, Dott. ing.**
**Via Col d'Echele, 25**
**I-36100 Vicenza (IT)**

Jouve, 18, rue St-Denis, 75001 Paris, France

## Description

La présente invention a pour but de permettre la réalisation d'une scie pour marbre, granits et autres pierres dures, qui utilise comme organe de coupe un ruban tournant sans fin soutenu par deux volants et dont l'avance s'effectue dans un plan vertical.

On sait que les scies destinées au travail des blocs de marbre de grandes dimensions comprennent généralement des lames de coupe animées d'un déplacement alternatif qui implique la présence de masses importantes en mouvement et l'obligation en conséquence de disposer d'une structure portante très robuste et de poids élevé. On notera en outre que le déplacement en va-et-vient de ces masses importantes introduit le risque d'une forte usure et nécessite donc des opérations de réparation fréquentes et coûteuses.

Une scie à ruban pour scier la pierre et présentant les caractéristiques du préambule de la revendication 1 est connue du brevet FR-A-516.412, comprenant deux volants à axe vertical entre lesquels est maintenu sous tension un ruban sans fin mobile de coupe. Des systèmes pour le refroidissement de la scie à ruban sont décrits dans les brevets GB-A-29443 A.D. 1912 et US-A-2.104.258, mais ils sont insuffisants pour obtenir une rapidité de sciage qui puisse réduire sensiblement les temps de travail et les forts coûts dus à l'usure du ruban de coupe.

L'adoption de la disposition suivant la présente invention permet au contraire de réaliser une scie dont les volants tournent dans un bain d'eau destiné à assurer le refroidissement et le nettoyage dudit ruban en remplissant en même temps également une fonction de sécurité pour la partie du ruban qui n'est pas coupante.

La machine suivant l'invention comprend deux volants formant supports pour le ruban de coupe et qui sont montés à l'intérieur des carters étanches permettant auxdits volants de tourner dans un bain d'eau destiné à assurer le refroidissement et le nettoyage dudit ruban au cours du travail tandis que les deux carters sont hydrauliquement réunis l'un à l'autre par une canalisation du type télescopique, qui permet le réglage de la tension du ruban et, à l'intérieur de laquelle passe le ruban sans fin, lequel est ainsi refroidi sur sa partie opposée à celle qui assure la coupe tout en étant efficacement protégé sur ladite partie.

On prévoit des dispositifs pour assurer le guidage du ruban sans fin, à l'effet de maintenir celui-ci centré dans le plan vertical où il se trouve et de garantir son guidage horizontal dans le secteur de coupe.

Le dessin annexé, donné à titre d'exemple, permettra de mieux comprendre l'invention, les caractéristiques qu'elle présente et les avantages qu'elle est susceptible de procurer :

Figure 1 est une vue schématique en élévation d'une scie suivant l'invention, avec coupe suivant le plan indiqué en I-I en fig. 2.

Figure 2 est la vue en plan correspondante avec coupe partielle suivant II-II (fig. 1).

Figure 3 est la vue de côté suivant la flèche III de fig. 1.

Figure 4 est une coupe de détail montrant à plus grande échelle le dispositif pour le guidage du ruban dans le sens vertical.

Figure 5 représente de la même manière le système pour le guidage du ruban dans le sens horizontal.

Figure 6 est une coupe suivant VI-VI (fig. 5).

Figure 7 est une vue en plan à échelle agrandie de l'ensemble associé au volant moteur qui supporte le ruban sans fin de coupe.

Figure 8 est une coupe verticale axiale de l'ensemble associé au volant mené.

Figure 9 montre le volant moteur en coupe verticale.

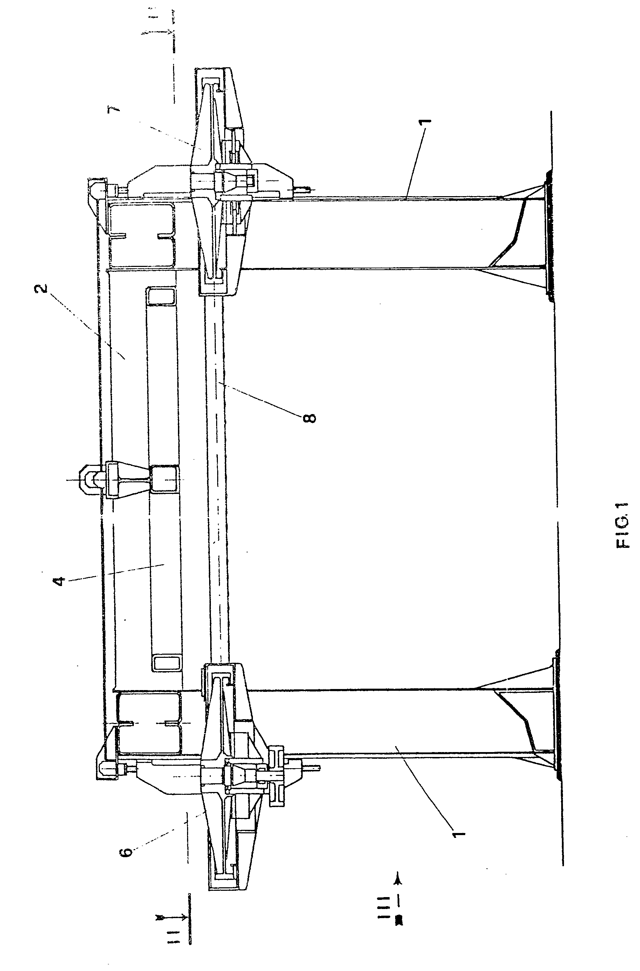

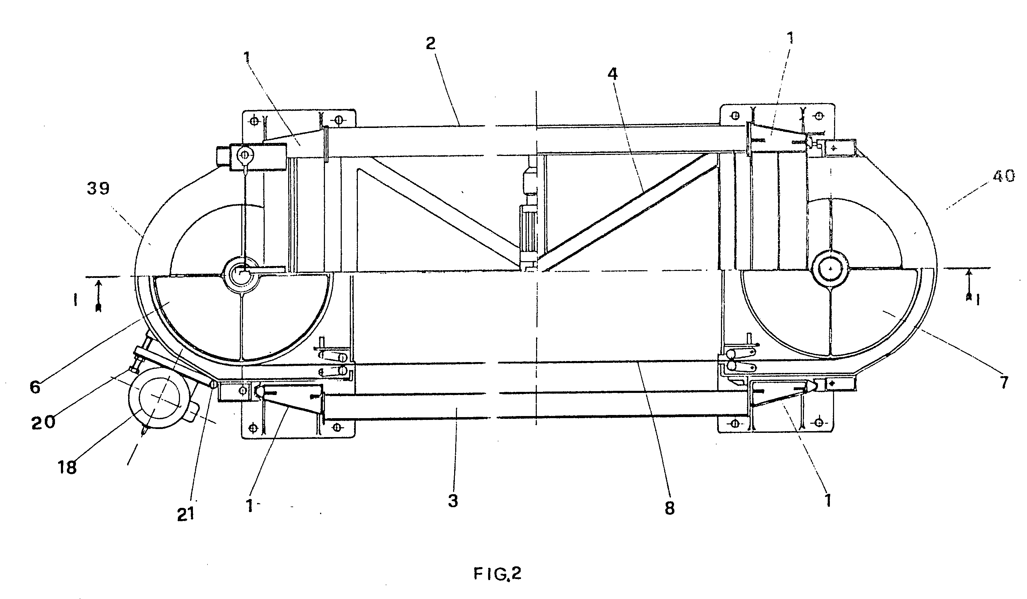

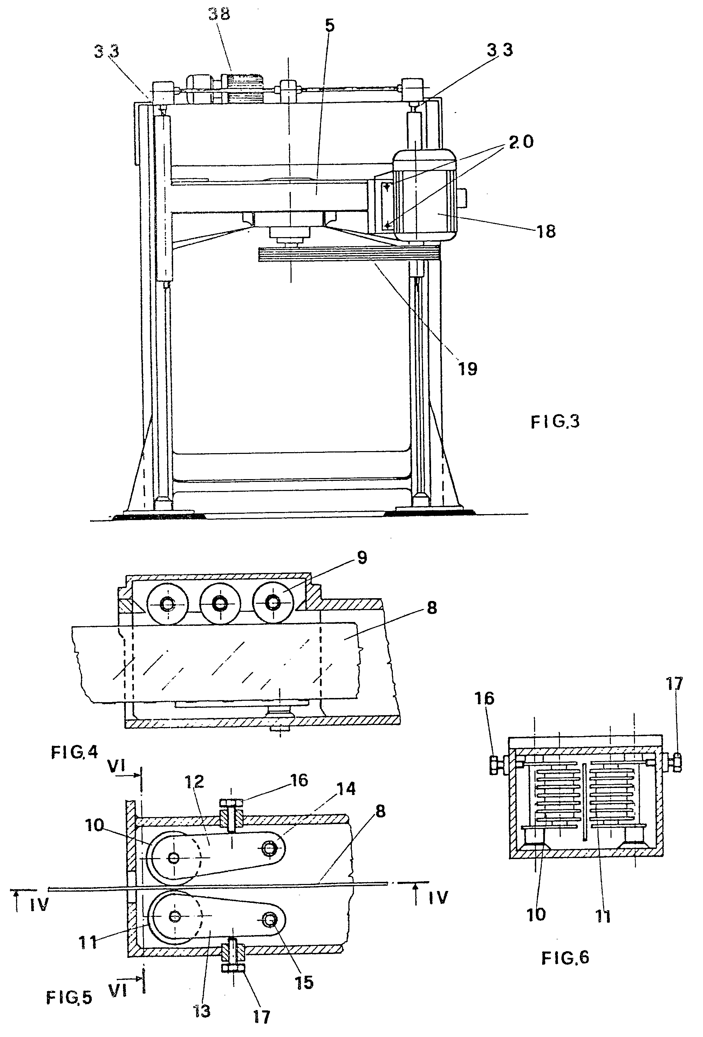

La machine telle que représentée comprend un bâti robuste en forme de portique qui dans l'exemple de réalisation considéré est constitué par quatre colonnes 1 (fig. 1 et 2) et deux poutres horizontales 2 et 3 reliées par une armature ajourée 4. Sur les colonnes 1 sont prévus des guides pour le déplacement de deux châssis mobiles 5 (fig. 3) qui supportent deux volants tournants. Ces derniers, dont l'un, référencé 6, est moteur tandis que l'autre 7 est mené, soutiennent sous tension une lame ou ruban sans fin de coupe 8, par exemple du type comportant de petits blocs diamantés.

La lame ou ruban 8 est maintenu centré sur les volants 6 et 7 par des galets 9 (fig. 4). qui s'opposent à son déplacement dans le sens vertical en étant montés en vis-à-vis sur l'un et l'autre des deux châssis de la machine. Cette retenue est également opérée à l'aide de deux séries de galets 10 et 11 (fig. 5 et 6) qui assurent le guidage du ruban 8 dans le sens horizontal. On notera que les galets 10 et 11 sont portés par des leviers 12 et 13 qui pivotent en 14, 15 sur le châssis mobile (5) correspondant de la machine et qui sont positionnés au moyen de vis de réglage 16, 17.

Le volant moteur 6 est entraîné en rotation par un moteur électrique 18 (fig. 2 et 3) associé à une transmission à courroies 19. Les courroies 19 sont maintenues sous tension par le moyen de vis de réglage 20 qui agissent sur la platine ou semelle qui supporte le moteur 18 et qui pivote en 21.

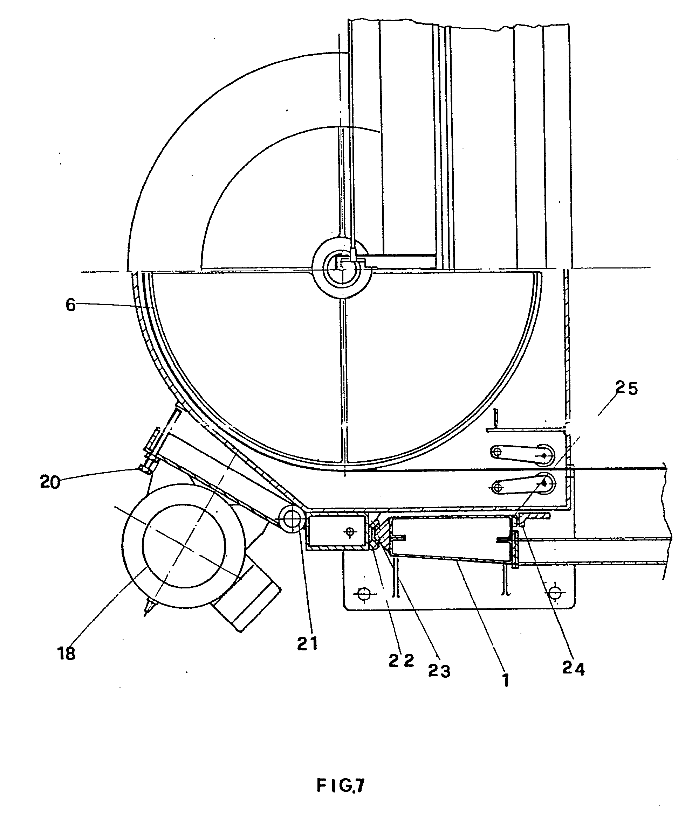

Le guidage dans le sens vertical du châssis mobile est assuré d'une part à l'aide de coulisseaux 22 (fig. 7) qui prennent appui sur les parois inclinées de guides trapézoïdaux 23 soudés aux colonnes 1, et d'autre part au moyen de coulisseaux opposés 24 mobiles le long de guides 25 eux-mêmes solidaires des colonnes 1 précitées.

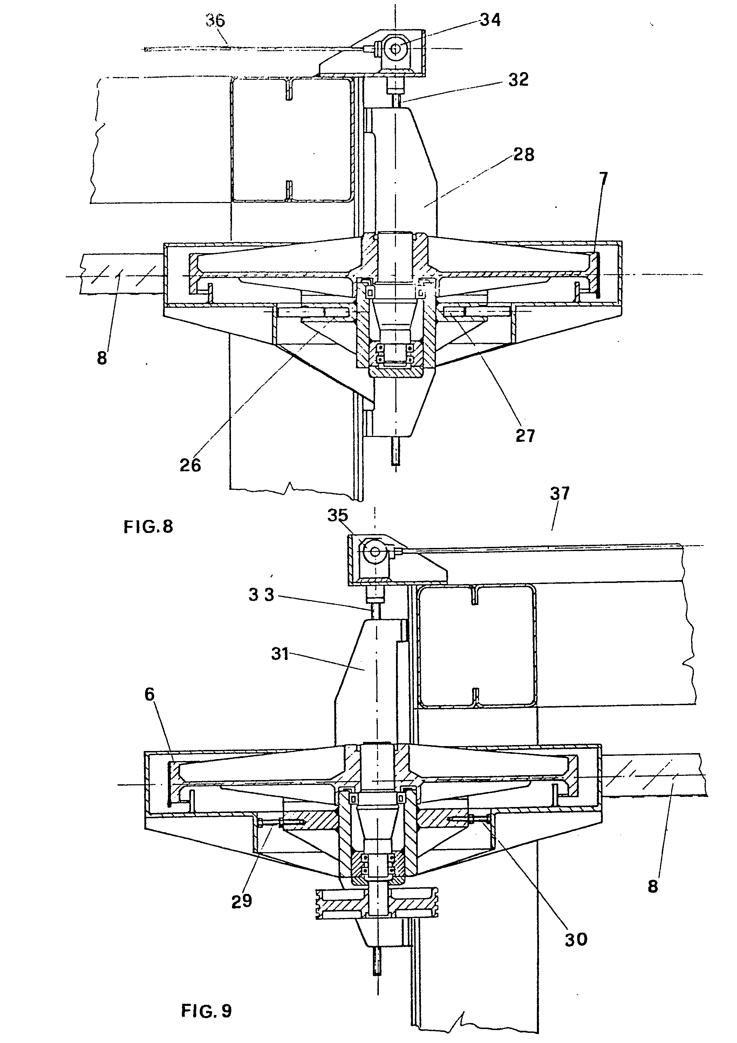

La lame ou ruban 8 est maintenu sous tension par deux vérins hydrauliques 26 et 27 (fig. 8) dont le cylindre est porté par le support sur lequel tourne le volant mené 7, tandis que son piston est solidaire d'un coulisseau 28 qui soutient verticalement ledit volant. Les deux vérins 26 et 27 travaillent en opposition, en ce sens que lorsque le vérin 26 est alimenté en fluide sous pression la lame ou ruban 8 est tendu tandis que lorsque le vérin 27 reçoit la pression, ladite lame ou ruban est relâché, par exemple afin de permettre son remplacement.

Il convient de remarquer que le volant moteur 6 est par contre muni de vis de réglage 29 et 30 (fig. 9) qui permettent son réglage correct une fois pour toutes.

Le mouvement d'avance verticale des coulisseaux 28 et 31 qui soutiennent les volants est opéré à l'aide de paires de tiges filetées 32 et 33 mises en rotation, à travers des transmissions d'angle appropriées 34 et 35, par des arbres tournants 36 et 37, eux-mêmes reliés mécaniquement à un moto-réducteur 38 (fig. 3) prévu dans la partie supérieure de la machine.

Les deux volants 6 et 7 sont montés à l'intérieur de carters étanches 39 et 40 (fig. 2) de façon à pouvoir tourner dans un bain d'eau qui assure de la sorte le nettoyage et le refroidissement permanents de la lame ou ruban de coupe au cours du travail. On notera à ce sujet que des canalisations télescopiques pour l'alimentation en eau de refroidissement sont susceptibles d'être prévues sur la partie de la lame ou ruban de coupe 8 opposée à celle qui travaille, de façon à relier les deux carters 39 et 40 l'un à l'autre par une sorte de canal et à assurer ainsi la circulation de l'eau à l'aide d'une seule pompe à l'intérieur des deux carters précités, la lame étant de la sorte refroidie sur sa portion opposée à celle destinée à la coupe.

Les carters 39 et 40 remplissent également une fonction de sécurité au niveau de la partie de la lame ou ruban qui n'est pas intéressée par la coupe.

On conçoit notamment que le bâti fixe de la machine peut ne comprendre que deux colonnes seulement, de façon à réduire l'encombrement général. De la même manière le mouvement d'avance du châssis mobile comprenant les volants porte-lame est susceptible d'être obtenu à l'aide de moyens différents des tiges filetées ci-dessus mentionnées, par exemple par des vérins hydrauliques ou similaires.

Conformément à une variante de mise en œuvre de l'invention, l'on peut conférer à la lame ou ruban de coupe une orientation différente de la position horizontale illustrée, par exemple verticale.

**Revendications**

1. Scie pour le découpage suivant un plan vertical de marbres, granits et autres pierres dures, avec un bâti fixe (1, 2, 3, 4) en forme de portique sur lequel se déplace un ensemble comprenant deux volants (6, 7) à axe vertical entre lesquels est maintenu sous tension un ruban sans fin mobile de coupe (8), équipé de petits blocs diamantés, les volants (6, 7) étant montés chacun sur un châssis mobile (5) susceptible de se déplacer le long des guides (23, 25) solidaires dudit bâti fixe, avec des moyens de poussée (26, 27) pour maintenir ledit ruban (8) sous tension, pendant le travail, caractérisé en ce que les volants (6 et 7) formant supports pour le ruban de coupe (8) sont montés chacun à l'intérieur d'un carter étanche (39, 40) permettant audit volant (6, 7) de tourner dans un bain d'eau destiné à assurer le refroidissement et le nettoyage dudit ruban (8) au cours du travail tandis que les deux carters (39, 40) sont hydrauliquement réunis l'un à l'autre par une canalisation du type télescopique qui permet le réglage de la tension du ruban et à l'intérieur de laquelle passe le ruban sans fin, lequel est ainsi refroidi sur sa partie opposée à celle qui assure la coupe tout en étant efficacement protégé sur ladite partie.

2. Scie suivant la revendication 1, caractérisée en ce que le ruban sans fin de coupe (8) est guidé dans un sens horizontal au niveau de sa partie de travail par des galets de pression (10 et 11).

3. Scie suivant les revendications 1 et 2, caractérisée en ce que les galets de pression (10 et 11) sont prévus par paires aux extrémités de la partie de travail du ruban sans fin, lesdits galets étant montés sur des leviers (12 et 13) maintenus à l'aide de vis de réglage (16 et 17) qui déterminent le positionnement dans le sens horizontal de la partie de travail dudit ruban.

4. Scie suivant l'une quelconque des revendications 1 à 3, caractérisée en ce qu'elle comprend deux séries de galets (9) montés fous sur les châssis mobiles (5) qui portent les volants (6, 7) et disposés au-delà des extrémités de la partie de travail dudit ruban, de façon à guider celui-ci dans le sens horizontal au cours du travail et à limiter la longueur de ladite partie qui est libre d'osciller.

**Claims**

1. Saw for cutting in a vertical plane marbles, granites and other hard stones, with a fixed frame (1, 2, 3, 4) in the shape of a portico on which there moves an assembly comprising two pulleys (6, 7) with vertical axis between which there is maintained under tension a movable endless cutting band (8) provided with small diamondbearing blocks, the pulleys (6, 7) being each mounted on a movable carriage (5) capable of moving along guides (23, 25) fast with said fixed frame, with pushing means (26, 27) for keeping said band (8) under tension during working, characterised in that the pulleys (6 and 7) forming supports for the cutting band (8) are each mounted at the interior of a fluid-tight housing (39, 40) permitting said pulleys (6, 7) to rotate in a bath of water serving to provide the cooling and the cleaning of said band (8) during the course of working, the two housings (39, 40) being coupled hydraulically one to the other by a tube of telescopic nature which permits adjustment of the tension of the band and at the interior of which the endless band moves, the band being thus cooled at its portion opposite to that which is carrying out the cut and being satisfactorily protected at said portion.

2. Saw, according to claim 1, characterised in that the endless cutting band (8) is guided in a horizontal direction at the level of its working portion by pressure rollers (10 and 11).

3. Saw, according to claims 1 and 2, characterised in that the pressure rollers (10 and 11) are provided in pairs at the end of the working portion of the endless band, said rollers being mounted on levers (12 and 13) supported by adjustment screws (16 and 17) which determine the positioning in the horizontal direction of the working portion of said band.

4. Saw, according to any one of claims 1 to 3, characterised in that it comprises two series of rollers (9) mounted freely rotatable on the movable carriages (5) which carry the pulleys (6, 7) and disposed beyond the ends of the working portion of the band, in such a manner as to guide the latter in the horizontal direction during working and to limit the length of said portion which is free to swing.

**Ansprüche**

1. Säge zum senkrechten Sägen von Marmor, Granit und sonstigen harten Steinen, mit einem Portalrahmen (1, 2, 3, 4) und dem eine Einheit verschiebbar ist, die zwei Schwungräder (6, 7) mit vertikaler Achse umfaßt, zwischen denen unter Spannung ein endloses Trennband (8) gehalten ist, welches mit kleinen mit Diamanten besetzten Blöcken ausgerüstet ist, wobei die Schwungräder (6, 7) jeweils an einem bewegbaren Rahmen (5) befestigt sind, welche längs an dem festen Portalrahmen befestigter Führungen (23, 25) bewegbar sind, sowie mit Andruckmitteln (26, 27), um das Band (8) während des Arbeitseinsatzes unter Spannung zu halten, dadurch gekennzeichnet, daß die Schwungräder (6, 7), die eine Halterung für das Trennband (8) bilden, jeweils im Inneren eines dichten Gehäuses (39, 40) angeordnet sind, wodurch sich die Schwungräder (6, 7) in einem Wasserbad drehen können, welches dazu bestimmt ist, die Kühlung und Reinigung des Bandes (8) während des Arbeitsbetriebes sicherzustellen, wobei die zwei Gehäuse (39, 40) hydraulisch miteinander über eine teleskopförmige Rohrleitung verbunden sind, welche die Spannung des Bandes erlaubt und durch deren Inneres das endlose Band hindurchläuft, welches ebenfalls an seinem dem das Sägen durchführenden Abschnitt gegenüberliegenden Abschnitt gekühlt wird, wobei es an diesem Abschnitt wirkungsvoll geschützt ist.

2. Säge nach Anspruch 1, dadurch gekennzeichnet, daß das endlose Trennband (8) horizontal auf der Höhe seines Arbeitsabschnittes von Andruckrollen (10 und 11) geführt ist.

3. Säge nach Anspruch 1 oder 2, dadurch gekennzeichnet, daß die Andruckrollen (10 und 11) paarweise an den Enden des Arbeitsabschnittes des endlosen Bandes vorgesehen und an mittels Einstellschrauben (16 und 17) gehaltenen Hebeln (12, 13) befestigt sind, wobei die Einstellschrauben die horizontale Lage des Arbeitsabschnittes des Bandes festlegen.

4. Säge nach irgendeinem der Ansprüche 1 bis 3, dadurch gekennzeichnet, daß die Säge zwei Reihen von Freilaufrollen aufweist, die an den zwei bewegbaren Rahmen (5), welche die Schwungräder (6, 7) tragen, befestigt und jenseits der Enden des Arbeitsabschnittes des Bandes derart angeordnet sind, dieses horizontal während des Arbeitsbetriebes zu führen und die Länge dieses Abschnittes zu begrenzen, die frei schwingen kann.

FIG.1

0 011 318

FIG,2

FIG.3

FIG.4

FIG.5

FIG.6

**FIG.7**

0 011 318

FIG.8

FIG. 9

5